Europäisches Patentamt

European Patent Office

Office européen des brevets

(19)

(11) Veröffentlichungsnummer : **0 161 452 B1**

(12) # EUROPÄISCHE PATENTSCHRIFT

(45) Veröffentlichungstag der Patentschrift :
02.03.88

(21) Anmeldenummer : 85103938.8

(22) Anmeldetag : 01.04.85

(51) Int. Cl.⁴ : **C 08 L 69/00, C 08 L 51/00**

(54) **Thermoplastische Formmassen.**

(30) Priorität : 14.04.84 DE 3414119

(43) Veröffentlichungstag der Anmeldung :
21.11.85 Patentblatt 85/47

(45) Bekanntmachung des Hinweises auf die Patenterteilung : 02.03.88 Patentblatt 88/09

(84) Benannte Vertragsstaaten :
**BE DE FR GB NL**

(56) Entgegenhaltungen :
EP-A- 0 111 260
EP-A- 0 132 339
US-A- 3 842 144
US-A- 3 985 704
US-A- 4 180 494

(73) Patentinhaber : **BASF Aktiengesellschaft
Carl-Bosch-Strasse 38
D-6700 Ludwigshafen (DE)**

(72) Erfinder : **Mitulla, Konrad, Dr.
An der Froschlache 23
D-6700 Ludwigshafen (DE)**
Erfinder : **Hambrecht, Juergen, Dr.
Werderstrasse 30
D-6900 Heidelberg (DE)**
Erfinder : **Echte, Adolf, Dr.
Leuschnerstrasse 42
D-6700 Ludwigshafen (DE)**
Erfinder : **Swoboda, Johann, Dr.
Neuwiesenstrasse 28
D-6700 Ludwigshafen (DE)**
Erfinder : **Siebel, Peter, Dr.
Trifelsring 20
D-6703 Limburgerhof (DE)**
Erfinder : **Schwaab, Josef, Dr.
Rieslingweg 8
D-6735 Maikammer (DE)**
Erfinder : **Frank, Herbert
Schillerstrasse 12
D-6714 Weisenheim (DE)**

**Beschreibung**

Die Erfindung betrifft eine thermoplastische Formmasse aus Polycarbonat als Hartmatrix, in der ein Pfropfmischpolymerisat als Weichphase mit Teilchen im Bereich von 200 bis 700 nm dispergiert ist. Das Pfropfmischpolymerisat besteht aus einem i.w. auf der Grundlage eines Diens aufgebauten Elastomeren und einer darauf in 2 Verfahrensschritten anpolymerisierten Pfropfhülle.

Zum Stand der Technik nennen wir:

1. DE-B 11 70 141
2. DE-B 18 10 993
3. DE-A 31 49 358
4. DE-A 32 10 284
5. EP-A 111 260 (Stand der Technik gemäß Artikel 54(3)EPÜ).

Mischungen von Styrol und Acrylnitril enthaltenden schlagzähen Polymerisaten mit Polycarbonaten sind in (1) und (2) beschrieben. Diese bekannten Formmassen besitzen im allgemeinen zufriedenstellende Eigenschaften. Die 2-stufige Pfropfung von ASA-Polymerisaten ist aus (3) bekannt und in (5) sind Mischungen aus ASA-Polymerisaten, die eine 2-stufige Pfropfhülle aufweisen, und Polycarbonaten beschrieben. Die in (4) beschriebene Masse aus PC und ASA weist zusätzlich ein Acrylatcopolymerisat auf.

Häufig wird aber eine höhere Zähigkeit und eine bessere, homogenere Verteilung der Weichphase, verbunden mit einer Verfestigung von Bindenähten bei aus diesen Massen hergestellten Formteilen verlangt. So weisen die z. B. aus (4) oder (5) bekannten Formmassen eine ungenügende Zähigkeit in der Kälte, insbesondere eine unzureichende multiaxiale Schlagzähigkeit auf.

Die aus (1) oder (2) bekannten Formmassen auf Basis von PC und ABS zeigen eine nicht-homogene Verteilung der Weichphase und keine festen Bindenähte, bei insgesamt niedriger multiaxialer Schlagzähigkeit.

Es bestand daher die Aufgabe, die Nachteile der bekannten Formmassen im wesentlichen auf Basis von ABS und Polycarbonat zu beheben, um den im Automobilsektor gestellten Anforderungen gerecht zu werden.

Diese Aufgabe wird gelöst durch eine Formmasse gemäß Patentanspruch 1.

Die Erfindung betrifft daher eine thermoplastische Formmasse enthaltend

A) 10 bis 90 Gew.-% bezogen auf die Summe aus A) und B), mindestens eines Polycarbonates und

B) 90 bis 10 Gew.-%, bezogen auf die Summe aus A) und B), mindestens eines Pfropfmischpolymerisates einer mittleren Teilchengröße im Bereich von 50 bis 700 nm ($d_{50}$-Wert der integralen Masseverteilung), das besteht aus

$b_1$) mindestens einem Elastomeren (Kautschuk), mit einer Einfriertemperatur von unter 0 °C, das 10 bis 80 Gew.%, vorzugsweise 30 bis 70 Gew.%, jeweils bezogen auf B), ausmacht, und

$b_2$) einer auf das Elastomere gepfropften Hülle, die 90 bis 20 Gew.%, vorzugsweise 70 bis 30 Gew.%, jeweils bezogen auf B), ausmacht, wobei das Elastomere $b_1$) einpolymerisiert enthält,

$b_1a_1$) 35 bis 100 Gew.%, vorzugsweise 40 bis 100 Gew.%, bezogen auf $b_1$, mindestens eines Diens aus der Gruppe der konjugierten Diene mit 4 oder 5 C-Atomen,

$b_1a_2$) 0 bis 65 Gew.%, vorzugsweise 10 bis 60 Gew.%, bezogen auf $b_1$, mindestens eines Monomeren aus der Gruppe der Alkylacrylate oder Alkylmethacrylate mit 1 bis 8 C-Atomen im Alkylrest, wobei die Summe aus $b_1a_1$ und $b_1a_2$ gleich 100 Gew.% ist und wobei die Hülle $b_2$) in an sich bekannter Weise durch sukzessive Polymerisation verschiedener Pfropfmonomerer oder Gemischen davon aufgebaut wird, wobei zuerst $b_2a_1$) in Gegenwart des Elastomeren $b_1$) und danach $b_2a_2$) in Gegenwart des Pfropfproduktes der 1. Verfahrensstufe umgesetzt wird,

dadurch gekennzeichnet, daß die Pfropfhülle einpolymerisiert enthält, bezogen auf $b_2$),

$b_2a_1$) 10 bis 90 Gew.%, vorzugsweise 50 bis 75 Gew.%, eines Gemisches aus mindestens einem vinylaromatischen Kohlenwasserstoff ($b_2a_1\alpha$) mit 8-12 C-Atomen und mindestens einem davon verschiedenen ethylenisch ungesättigten Monomeren ($b_2a_1\beta$) in einem Gewichtsverhältnis ($b_2a_1\alpha$)/($b_2a_1\beta$) von 90 zu 10 bis 60 zu 40 und

$b_2a_2$) 90 bis 10 Gew.%, vorzugsweise 50 bis 25 Gew.%, mindestens eines von $b_2a_1\beta$) verschiedenen Monomeren aus der Gruppe der Alkylacrylate oder Alkylmethacrylate mit 1 bis 8 C-Atomen im Alkylrest.

Nachstehend wird der Aufbau der erfindungsgemäßen Formmasse aus den Komponenten, der Aufbau der Bestandteile der Formmasse und deren Herstellung aus den Komponenten beschrieben.

Die erfindungsgemäße Formmasse enthält die Komponenten A) und B), vorzugsweise besteht sie aus diesen. Die Komponente A) macht 10 bis 90 Gew.%, vorzugsweise 30 bis 90 Gew.%, bezogen auf A + B, aus. Die Komponente B ergänzt die Gew.% der Komponente A zu 100.

Die Komponente B) it aus 2 Teilen aufgebaut, bzw. besteht aus mindestens einem Elastomeren $b_1$) und mindestens einer Pfropfhülle $b_2$), wobei sich die Anteile beider Bestandteile zu 100 addieren.

Der Anteil des Elastomeren $b_1$), bezogen auf B), macht 10 bis 80 Gew.%, vorzugsweise 30 bis 70 Gew.%, insbesondere 35 bis 60 Gew.% aus.

Das Pfropfmischpolymerisat ist erhältlich durch sukzessive Polymerisation (darunter ist die nacheinanderfolgende Polymerisation zu verstehen, wobei die Monomeren der 1. Stufe bis praktisch zum vollständigen Umsatz einpolymerisiert werden, bevor neue Monomere zugegeben werden) unterschiedlicher Monomerer, oder von Gemischen von Monomeren, in zwei Verfahrensschritten in Gegenwart des Elastomeren $b_1$) in Emulsion, wobei die Teilchen des Latex des Elastomeren in an sich bekannter Weise, z. B. durch Agglomeration, auf den gewünschten Teilchengrößenbereich innerhalb des genannten Bereiches von 50 bis 700 nm ($d_{50}$-Wert der integralen Masseverteilung) eingestellt werden können, bevor die Pfropfung erfolgt. Die Pfropfung wird so durchgeführt, daß in der ersten Verfahrensstufe 10 bis 90 Gew.%, vorzugsweise 50 bis 75 Gew.% und insbesondere 55 bis 70 Gew.% von $b_2a_1$), jeweils bezogen auf $b_2$), an- bzw. aufpolymerisiert werden. In der zweiten Verfahrensstufe werden 90 bis 10 Gew.%, vorzugsweise 50 bis 25 Gew.% und insbesondere 45 bis 30 Gew.% von $b_2a_2$ anpolymerisiert.

D. h. die Pfropfhülle enthält die in den beiden Verfahrensstufen verwendeten Monomeren in den genannten Mengen einpolymerisiert.

## Komponente A)

Unter Polycarbonaten A im Sinne der erfindungsgemäßen Formmasse sollen aromatische Polycarbonate auf der Basis von Homopolycarbonaten und Copolycarbonaten verstanden werden. Als Bisphenole kommen dabei beispielsweise in Frage : Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u. a. in der Monographie H. Schnell, Chemistry and Physics of Polycarbonates, Interscience Publishers, New York, 1964, in der US-A 2 999 835 und in der DE-A 22 48 817 beschrieben sind. Besonders bevorzugt sind Polycarbonate auf der Basis von 2,2-Bis-(4-hydroxyphenyl)propan. Die Synthese der Polycarbonate wird beispielsweise in der US-A 2 999 835 und der GB-A 7 72 627 beschrieben.

## Komponente B

Die Komponente B (Pfropfmischpolymerisat oder Weichphase) der erfindungsgemäßen Formmasse ist in der Komponente A, die als Hartmatrix fungiert, dispergiert in Form von Teilchen im Bereich von 50 bis 700 nm (mittlere Teilchengröße, $d_{50}$-Wert der integralen Masseverteilung).

Die Komponente B besteht aus 2 Teilen, nämlich mindestens einem Elastomeren (Kautschuk) $b_1$), das eine Einfriertemperatur von weniger als 0 °C, vorzugsweise von weniger als — 50 °C aufweist. Dieses Elastomere ist aus Homo- oder Copolymerisaten konjugierter Diene $b_1a_1$) mit 4 bis 5 C-Atomen, insbesondere 1,3-Butadien und Isopren aufgebaut. Vorzugsweise handelt es sich um Polybutadien als Elastomeres. Das Elastomere kann jedoch als Comonomere $b_1a_2$) bis zu 65 Gew.%, vorzugsweise 10 bis 60 Gew.%, jeweils bezogen auf $b_1$) eines oder mehrerer weiterer Monomeren aus der Gruppe der Alkylacrylate und Alkylmethacrylate mit 1 bis 8 C-Atomen im Alkylrest einpolymerisiert enthalten. Bevorzugt werden die Alkylacrylate und hiervon insbesondere das n-Butylacrylat und das 2-Ethylhexylacrylat bzw. deren Gemische.

Die Herstellung der einzusetzenden Komponente B kann beispielsweise nach der in der DE-C 12 60 135 beschriebenen Methode erfolgen.

## Herstellung des Elastomeren $b_1$

Das Elastomer, die Pfropfgrundlage $b_1$), wird hergestellt, indem die konjugierten Diene $b_1a_1$) allein, gegebenenfalls zusammen mit den weiteren Comonomeren $b_1a_2$), in wäßriger Emulsion in an sich bekannter Weise bei Temperaturen von 20 bis 100 °C, vorzugsweise von 50 bis 80 °C polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.%, insbesondere von 1 bis 2 Gew.%, bezogen auf die bei der Herstellung der Pfropfgrundlage ($b_1$) eingesetzten Monomeren, einzusetzen. Im allgemeinen wird bei einem Wasser- zu Monomeren-Verhältnis von 2 : 1 bis 0,7 : 1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.%, bezogen auf die bei der Herstellung der Pfropfgrundlage ($b_1$) eingesetzten Monomeren, eingesetzt. Als weitere Polymerisationshilfsstoffe können die üblichen Puffersubstanzen, durch welche pH-Werte von vorzugsweise 6 bis 9 eingestellt werden — z. B. Natriumbicarbonat und Natriumpyrophosphat- sowie 0,1 bis 3 Gew.% eines Molekulargewichtsreglers — wie Mercaptane, Terpinole oder dimeres $\alpha$-Methylstyrol — bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisats $b_1$ einen $d_{50}$-Wert im Bereich von etwa 50 bis 700 nm, vorzugsweise im Bereich von 250 bis 600 nm besitzt. Oder aber das Emulsionspolymerisat, mit mittleren Teilchengrößen im Bereich von 60 bis 150 nm wird in bekannter Weise agglomeriert (vgl. DE-B 24 27 960).

Herstellung der Pfropfhülle $b_2$)

Die Pfropfhülle, Komponente $b_2$, ist 2-stufig aufgebaut und wird durch sukzessive Polymerisation der Monomeren $b_2a_1$) und $b_2a_2$) in 2 Verfahrensschritten in Gegenwart des Latex des Elastomeren $b_1$) erzeugt. Zu ihrer Herstellung wird zunächst mindestens ein vinylaromatischer Kohlenwasserstoff mit bis zu 12 C-Atomen ($b_2a_1$ $\alpha$) im Gemisch mit mindestens einem davon verschiedenen ethylenisch ungesättigten Monomeren ($b_2a_1$ $\beta$) verwendet. Das Verhältnis der einpolymerisierten Monomeren ($b_2a_1$ $\alpha$)/($b_2a_1$ $\beta$) in dem in der ersten Verfahrensstufe erzeugten Copolymerisat (Pfropfast !) soll 90 zu 10 bis 60 zu 40 betragen.

Dem Fachmann ist bekannt, wie er dieses Ziel erreicht (Vorlage der Monomeren, Zugabe während der Polymerisation und dgl.).

Beispiele für Monomere ($b_2a_1$ $\alpha$) sind Styrol, $\alpha$-Methylstyrol und kernalkylierte Styrole, wie p-Methylstyrol und tert.-Butylstyrol. Besonders bevorzugt werden Styrol, $\alpha$-Methylstyrol und p-Methylstyrol eingesetzt.

Beispiele für davon verschiedene copolymerisierbare, ethylenisch ungesättigte Monomere ($b_2a_1$ $\beta$) sind Acrylnitril, Acrylsäure, Maleinsäureanhydrid, Acrylamid und/oder Vinylmethylether. Besonders bevorzugt wird Acrylnitril. Als besonders bevorzugte Monomeren-Gemische für die Durchführung der 1. Verfahrensstufe der Pfropfung werden vor allem Styrol und Acrylnitril, $\alpha$-Methylstyrol oder p-Methylstyrol und Acrylnitril, sowie Styrol, $\alpha$-Methylstyrol und Acrylnitril eingesetzt.

Es ist vorteilhaft, die Pfropfmischpolymerisation des Gemisches der Monomeren ($b_2a_1$ $\alpha$) und ($b_2a_1$ $\beta$) auf das als Pfropfgrundlage dienende Elastomere $b_1$) in wäßriger Emulsion unter den üblichen, vorstehend aufgeführten Bedingungen durchzuführen. Die Pfropfmischpolymerisation kann zweckmäßig im gleichen System erfolgen wie die Emulsionspolymerisation zur Herstellung der Pfropfgrundlage $b_1$), wobei, falls notwendig, weiterer Emulgator und Initiator zugegeben werden kann. Das aufzupfropfende Monomerengemisch kann dem Reaktionsgemisch, nur jeweils bezogen auf die betreffende Verfahrensstufe, auf einmal, absatzweise in mehreren Stufen oder vorzugsweise kontinuierlich während der Polymerisation zugegeben werden. Die Pfropfmischpolymerisation in Gegenwart des Elastomeren wird so geführt, daß ein Pfropfgrad von 2,5 bis 50, vorzugsweise von 10 bis 40, bezogen auf die 1. Verfahrensstufe, im Pfropfmischpolymerisat resultiert.

Unter Pfropfgrad (PG) versteht man das Verhältnis der Pfropfmonomeren zum Pfropfkautschuk in Gewichtsteilen, multipliziert mit dem Faktor 100

$$PG = \text{Pfropfmonomeren/Pfropfkautschuk} \cdot 100$$

wobei für die erste Pfropfstufe gilt :

$$b_2a_1 / b_1 + b_2a_1$$

und für die zweite Pfropfstufe :

$$b_2a_2/b_1 + b_2a_1 + b_2a_2$$

Danach wird im zweiten Verfahrensschritt mindestens ein Monomeres $b_2a_2$) aus der Gruppe der Alkylmethacrylate oder der Alkylacrylate mit 1 bis 8 C-Atomen im Alkylrest an- und somit einpolymerisiert. Bevorzugt werden nur die Alkylmethacrylate und von diesen insbesondere das Methylmethacrylat einpolymerisiert.

Auch der zweite Verfahrensschritt der Pfropfmischpolymerisation wird zweckmäßigerweise im gleichen System durchgeführt. Dabei kann, falls notwendig, weiterer Emulgator und Initiator zugegeben werden. Das aufzupfropfende Monomere, bevorzugt MMA, kann dem Reaktionsgemisch auf einmal, absatzweise in mehreren Schritten oder vorzugsweise kontinuierlich während der Polymerisation zugegeben werden. Die Pfropfmischpolymerisation in Gegenwart des bereits gepropften Latex des Elastomeren $b_1$) wird so geführt, daß ein Pfropfgrad von 5 bis 50, vorzugsweise von 10 bis 40, resultiert. Das Pfropfmischpolymerisat B) soll mittlere Teilchengrößen von 50 bis 700 nm ($d_{50}$-Wert) insbesondere von 200 bis 500 besitzen. Die Bedingungen der Pfropfmischpolymerisation sind so zu wählen, daß Teilchengrößen in diesem Bereich resultieren. Maßnahmen hierzu sind bekannt und z. B. in der DE-C 12 60 135 und der DE-A 28 26 925 sowie in Journal of Applied Polymer Science, Vol. 9 (1965), S. 2929 bis 2938 beschrieben.

Zusätzlich zu dem Pfropfmischpolymerisat ($b_1 + b_2$) enthält die Komponente B) noch einen geringeren Anteil einer nicht-elastomeren Hartkomponente, die bei der Pfropfmischpolymerisation entsteht und aus freien, nicht gepfropften Copolymerisaten oder Homopolymerisaten der Pfropfmonomeren besteht.

Falls gewünscht, insbesondere wenn dies das Eigenschaftsbild erfordert, kann der aus den Komponenten A und B bestehenden erfindungsgemäßen Formmasse, noch ein Copolymerisat zugefügt werden. Es kann sich dabei insbesondere um ein (Co)Polymerisat handeln, das insbesondere aus den Monomeren der Pfropfhülle $b_2$) aufgebaut ist und das als Hartmatrix für die Komponente B) fungiert. Bei dieser zusätzlichen, separat hergestellten Hartkomponente kann es sich z. B. um ein Styrol/Acrylnitril-Copolymerisat, ein $\alpha$-Methylstyrol/Acrylnitril-Copolymerisat, ein Methylmethacrylat-Polymerisat, ein Styrol/Maleinsäureanhydrid-Copolymerisat oder ein $\alpha$-Methylstyrol/Styrol/Acrylnitril-, ein Styrol/Acrylnitril/Maleinsäureanhydrid-Terpolymerisat, bzw. ein $\alpha$-Methylstyrol/Styrol/Acrylnitril-Terpolymerisat handeln. Diese Copolymerisate können einzeln oder auch in Mischung miteinander als teilweiser Ersatz für die Hartkomponente A) eingesetzt werden.

Die zusätzliche, separat hergestellte Hartkomponente kann nach den herkömmlichen Methoden erhalten werden. So kann z. B. die Copolymerisation des Styrols und/oder $\alpha$-Methylstyrols mit dem Acrylnitril in Masse, Lösung, Suspension oder wäßriger Emulsion durchgeführt werden. Die Hartkomponente hat vorzugsweise eine Viskositätszahl von 40 bis 100, insbesondere von 50 bis 80. Die Bestimmung der Viskositätszahl erfolgt analog DIN 53 726 ; dabei werden 0,5 g Material in 100 ml Dimethylformamid gelöst.

### Komponente C

Die erfindungsgemäße Formmasse kann ferner Zusatzstoffe enthalten, wie sie für ABS-Polymerisate und Polycarbonate gebräuchlich sind. Als solche Zusatzstoffe seien beispielsweise genannt : Füllstoffe, Farbstoffe, Pigmente, Antistatika, Antioxidantien, Flammschutzmittel und Schmiermittel. Von den Schmiermitteln sind insbesondere die auf Basis von Ethylen- und Propylenoxid aufgebauten Pluriole [R] zu nennen, die bevorzugt angewendet werden, um die Verarbeitungseigenschaften der Formmassen auf einem hohen Niveau zu halten. Die Zusatzstoffe werden in üblichen Mengen, vorzugsweise in Mengen von 0,1 bis zu insgesamt etwa 30 Gew.%, bezogen auf die Formmasse aus A + B, eingesetzt.

### Herstellung der Formmasse

Das Mischen der Komponenten A), B) und C) kann nach allen bekannten Methoden erfolgen. Vorzugsweise geschieht jedoch das Mischen der Komponenten A), B) und C) durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation [Komponente (B)] können aber auch teilweise entwässert oder direkt als Dispersion mit dem Polycarbonat A), und der Komponente C), vermischt werden, wobei dann während des Vermischens die vollständige Trocknung des Pfropfmischpolymerisats erfolgt.

Die Herstellung der Formmassen gemäß Erfindung erfolgt z. B. dadurch, daß eine Schmelze der harten Polymerisate, Komponente A) mit dem Pfropfmischpolymerisat B bei Temperaturen von über 200 °C intensiver mischt wird. Sie erfolgt, um eine besonders homogene Verteilung der Weichphase in der Hartmatrix zu erzielen, bevorzugt dadurch, daß man in die Schmelze der Polycarbonate [Komponente A], z. B. in einem Extruder das gefällte Pfropfmischpolymerisat B), das einen Restwassergehalt von 10 bis 40 Gew.% aufweist, bei Temperaturen über 180 °C einbringt und intensiv vermischt. Man kann auch die Schmelze direkt mit einer Dispersion des Pfropfmischpolymerisates B), die einen Feststoffgehalt von 40 bis 70 Gew.% aufweist, bei Temperaturen über 180 °C intensiv vermischen.

Die erfindungsgemäße Formmasse kann nach den bekannten Verfahren der Thermoplastverarbeitung verarbeitet werden, also z. B. durch Extrudieren, Spritzgießen, Kalandrieren, Hohlkörperblasen, Pressen oder Sintern ; besonders bevorzugt werden aus den nach dem erfindungsgemäßen Verfahren hergestellten Formmassen Formteile durch Spritzgießen für den Automobilbau hergestellt.

Die in der vorliegenden Anmeldung beschriebenen Parameter wurden wie folgt bestimmt :

1. Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 82 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht. Ebenso haben dann 50 Gew.% der Teilchen einen größeren Durchmesser

als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Werte definiert mit dem Unterschied, daß sie auf 10 bzw. 90 Gew.% der Teilchen bezogen sind. Der Quotient

$$d_{90}\text{-}d_{10}/d_{50} = Q$$

stellt ein Maß für die Verteilungsbreite der Teilchengröße dar.

2. Die Kerbschlagzähigkeit in $[kJ/m^2]$ der Produkte wurde nach DIN 53 453 an bei 250 °C gespritzten Normkleinstäben bei 23 °C gemessen. Die Schlagzähigkeiten der Probenvergleichsversuche und der Beispiele sind in die Tabelle 2 mit aufgenommen.

3. Der Plastechontest in [Nm] der Produkte wurde nach DIN 53 453 an bei 250 °C gespritzten Rundscheiben mit den Abmessungen, Durchmesser x Dicke, 60 mm × 2 mm bei 23 °C gemessen. Die Werte der Proben von Beispielen und von Vergleichsversuchen finden sich in der Tabelle 2.

4. Die Viskositätszahl des eingesetzten Polycarbonats wurde in einer 0,5 %igen Lösung in Methylenchlorid bei 20 °C gemessen.

5. Die Prüfung der Bindenaht erfolgte an einer Probe eines zweifach angespritzten Stabes mit Zusammenflußstelle der Schmelze in der Mitte des Meßbereichs. Die Bindenahtfestigkeit in $kJ/m^2$ wurde dadurch ermittelt, daß die Schlagzähigkeit $(a_n)$ dieses Stabes bei 23 °C gemessen wurde.

Die Erfindung wird durch die nachfolgenden Beispiele näher erläutert. Die in den Beispielen genannten Teile und Prozente beziehen sich, sofern nicht anders angegeben, auf das Gewicht.

Für die Herstellung erfindungsgemäßer Formmassen und Formmassen für Vergleichsversuche wurden die nachfolgend beschriebenen Produkte verwendet.

I. Als Komponente A) wurde ein Polycarbonat auf der Basis von 2,2-Bis-(4-hydroxiphenyl)propan mit einer Grenzviskosität von 0,55 [dl/g] eingesetzt.

II. Als Komponente B) wurden die Pfropfmischpolymerisate $B_1$ bis $B_7$ verwendet.

Durch Polymerisation von 60 Teilen Butadien in Gegenwart einer Lösung von 0,5 Teilen tert.-Dodecylmercaptan, 0,7 Teilen Kalium-$C_{14}$-$C_{18}$-Alkylsulfonat als Emulgator, 0,2 Teilen Kaliumperoxidisulfat und 0,2 Teilen Natriumpyrophosphat in 80 Teilen Wasser wird bei 65 °C ein Polybutadienlatex hergestellt. Nach Beendigung der Polymerisation wird der Polymerisationsautoklav entspannt. Der Umsatz betrug 98 %.

Es wurde ein Polybutadienlatex erhalten, dessen mittlere Teilchengröße bei 0,1 μm liegt. Dieser Latex wird durch Zusatz von 25 Teilen einer Emulsion eines Copolymeren aus 96 Teilen Ethylacrylat und 4 Teilen Acrylsäureamid mit einem Feststoffgehalt von 10 Gew.% agglomeriert, wobei ein Polybutadienlatex mit einer mittleren Teilchengröße von 0,3 bis 0,4 μm entstand.

140 Teile des erhaltenen Polybutadien-Latex wurden mit der in der Tabelle 1 unter $b_2a_1$ angegebenen Menge einer Mischung aus Styrol und Acrylnitril (Verhältnis 70 : 30) und 50 Teilen Wasser gemischt und unter Rühren nach Zusatz von weiteren 0,08 Teilen Kaliumpersulfat und 0,05 Teilen Lauroylperoxid 3 Stunden auf 65 °C erhitzt. Nach Beendigung der ersten Stufe der Pfropfpolymerisation wurde ohne weitere Zusatzstoffe die in Tabelle 1 unter $b_2a_2$ angegebene Menge Methylmethacrylat während 2 Stunden zugegeben. Die Temperatur betrug während des Zulaufs 65 °C.

Nach Beendigung der Pfropfpolymerisation wurde das Produkt mittels Calciumchloridlösung bei 95 °C aus der Dispersion gefällt, mit Wasser gewaschen und im warmen Luftstrom getrocknet.

Herstellung der Pfropfmischpolymerisate $B_1$ und $B_2$ mit einstufiger Hülle (für Vergleichsversuche)

140 Teile des erhaltenen Polybutadienlatex wurden mit der in der Tabelle 1 unter $b_2a_1$ angegebenen Menge einer Mischung aus Styrol und Acrylnitril (Verhältnis 70 : 30) und 50 Teilen Wasser gemischt und unter Rühren nach Zusatz von weiteren 0,08 Teilen Kaliumpersulfat und 0,05 Teilen Lauroylperoxid 3 Stunden auf 65 °C erhitzt. Danach wurde das Produkt mittels Calciumchloridlösung bei 95 °C aus der Dispersion gefällt, mit Wasser gewaschen und im warmen Luftstrom getrocknet.

Beispiele und Vergleichsversuche

Beispiele 1 bis 6 und Vergleichsversuche 1 und 2

Die in der Tabelle 2 angegebenen Gewichtsteile der Komponente A und B wurden in trockener Form gemischt, auf einem Extruder bei 260 °C aufgeschmolzen, geknetet und anschließend granuliert. Aus dem Granulat wurden Proben für Formmassen hergestellt, an denen die in den Tabellen aufgeführten Eigenschaften bestimmt wurden.

(Siehe Tabelle 1 Seite 7 f.)

Tabelle 1

Zusammensetzung der Pfropfmischpolymerisate $B_1$ bis $B_7$

|  | $b_1$ Teile | $b_2a_1$ Teile | $b_2a_2$ Teile |
|---|---|---|---|
| B 1 | 60 | 40 | – |
| B 2 | 60 | 60 | – |
| B 3 | 60 | 35 | 5 |
| B 4 | 60 | 30 | 10 |
| B 5 | 60 | 20 | 20 |
| B 6 | 60 | 24 | 36 |
| B 7 | 60 | 36 | 24 |

Tabelle 2

| Komponente A | Teile | Komponente B | Teile | | Kerbschlagzähigkeit | Plastechontest | Bindenahtfestigkeit |
|---|---|---|---|---|---|---|---|
| Vergleich 1 | 60 | 40 | B 1 | | 20 | 34 | 10 |
| Vergleich 2 | 60 | 40 | B 2 | | 24 | 40 | 12 |
| Beispiel 1 | 60 | 40 | B 3 | | 26 | 46 | 20 |
| Beispiel 2 | 60 | 40 | B 4 | | 24 | 43 | 22 |
| Beispiel 3 | 60 | 40 | B 5 | | 26 | 41 | 24 |
| Beispiel 4 | 60 | 40 | B 6 | | 24 | 55 | 28 |
| Beispiel 5 | 60 | 40 | B 7 | | 31 | 50 | 24 |
| Beispiel 6 | 50 | 50 | B 7 | | 24 | 35 | 22 |

0 161 452

# 0 161 452

**Patentansprüche**

1. Thermoplastische Formmasse, enthaltend

A) 10 bis 90 Gew.%, bezogen auf die Summe aus A) und B), mindestens eines Polycarbonates und

B) 90 bis 10 Gew.%, bezogen auf die Summe aus A) und B), mindestens eines Pfropfmischpolymerisates einer mittleren Teilchengröße im Bereich von 50 bis 700 nm ($d_{50}$-Wert der integralen Masseverteilung), das besteht aus

$b_1$) mindestens einem Elastomeren (Kautschuk) mit einer Einfriertemperatur von unter 0 °C, das 10 bis 80 Gew.%, bezogen auf B), ausmacht, und

$b_2$) einer auf das Elastomere gepfropften Hülle, die 90 bis 20 Gew.%, bezogen auf B), ausmacht, wobei das Elastomere $b_1$) einpolymerisiert enthält,

$b_1a_1$) 35 bis 100 Gew.% bezogen auf $b_1$, mindestens eines Diens aus der Gruppe der konjugierten Diene mit 4 oder 5 C-Atomen,

$b_1a_2$) 0 bis 65 Gew.%, bezogen auf $b_1$, mindestens eines Monomeren aus der Gruppe der Alkylacrylate oder Alkylmethacrylate mit 1 bis 8 C-Atomen im Alkylrest, wobei die Summe aus $b_1a_1$ und $b_1a_2$ gleich 100 Gew.% ist,

und wobei die Hülle $b_2$) in an sich bekannter Weise durch sukzessive Polymerisation verschiedener Pfropfmonomerer oder Gemischen davon aufgebaut wird, wobei zuerst $b_2a_1$) in Gegenwart des Elastomeren $b_1$) und danach $b_2a_2$) in Gegenwart des Pfropfproduktes der 1. Verfahrensstufe umgesetzt wird,

dadurch gekennzeichnet, daß die Pfropfhülle einpolymerisiert enthält, bezogen auf $b_2$)

$b_2a_1$) 10 bis 90 Gew.% eines Gemisches aus mindestens einem vinylaromatischen Kohlenwasserstoff mit 8 bis 12 C-Atomen ($b_2a_1\alpha$) und mindestens einem davon verschiedenen ethylenisch ungesättigten Monomeren ($b_2a_1 \beta$) in einem Gewichtsverhältnis ($b_2a_1 \alpha$)/($b_2a_1 \beta$) von 90 zu 10 bis 60 zu 40 und

$b_2a_2$) 90 bis 10 Gew.% mindestens eines von $b_2a_1 \beta$) verschiedenen Monomeren aus der Gruppe der Alkylacrylate oder der Alkylmethacrylate mit 1 bis 8 C-Atomen im Alkylrest.

2. Thermoplastische Formmasse gemäß Anspruch 1, enthaltend

A) 30 bis 70 Gew.% des Polycarbonates und

B) 70 bis 30 Gew.% des Pfropfmischpolymerisates, das besteht aus

$b_1$) mindestens einem Elastomeren (Kautschuk), das 30 bis 70 Gew.%, bezogen auf B), ausmacht, und

$b_2$) einer auf das Elastomere gepfropften Hülle, die 70 bis 30 Gew.%, bezogen auf B), ausmacht, dadurch gekennzeichnet, daß die Pfropfhülle einpolymerisiert enthält, bezogen auf $b_2$),

$b_2a_1$) 50 bis 75 Gew.%, eines Gemisches aus dem vinylaromatischen Kohlenwasserstoff ($b_2a_1\alpha$) und dem ethylenisch ungesättigten Monomeren ($b_2a_1 \beta$) und

$b_2a_2$) 50 bis 25 Gew.% des von $b_2a_1 \beta$) verschiedenen Monomeren.

3. Thermoplastische Formmasse gemäß Anspruch 1, wobei das Elastomere $b_1$) ausschließlich einpolymerisiert enthält,

$b_1a_1$) ein Dien aus der Gruppe der konjugierten Diene mit 4 oder 5 C-Atomen.

4. Thermoplastische Formmasse gemäß Anspruch 2, wobei das Elastomere $b_1$) als Monomeres $b_1a_1$) nur Butadien einpolymerisiert enthält.

5. Verwendung von Formmassen gemäß Anspruch 1 zur Herstellung von Formteilen.

6. Formteile, hergestellt aus Formmassen gemäß Anspruch 1.

**Claims**

1. A thermoplastic molding material containing

A) from 10 to 90 % by weight, based on the sum of A) and B), of one or more polycarbonates and

B) from 90 to 10 % by weight, based on the sum of A) and B), of one or more graft copolymers which have a mean particle size of from 50 to 700 nm ($d_{50}$ value of the integral mass distribution) and consist of

$b_1$) one or more elastomers (rubbers) having a glass transition temperature of less than 0 °C, which account for from 10 to 80 % by weight, based on B), and

$b_2$) a shell which is grafted onto the elastomer and accounts for from 90 to 20 % by weight, based on B), the elastomer $b_1$) containing, as copolymerized units,

9

$b_1a_1$) from 35 to 100 % by weight, based on $b_1$, of one or more dienes from the group consisting of the conjugated dienes of 4 or 5 carbon atoms, and

$b_1a_2$) from 0 to 65 % by weight, based on $b_1$, of one or more monomers from the group consisting of the alkyl acrylates or alkyl methacrylates where alkyl is of 1 to 8 carbon atoms, the sum of $b_1a_1$ and $b_1a_2$ being 100 % by weight and the shell $b_2$) being built up in a conventional manner by successive polymerization of various graft monomers or mixtures thereof, first $b_2a_1$) being reacted in the presence of the elastomer $b_1$) and then $b_2a_2$) being reacted in the presence of the graft product from the first process step, wherein the grafted shell contains, as copolymerized units,

$b_2a_1$) from 10 to 90 % by weight of a mixture of one or more vinylaromatic hydrocarbons of 8 to 12 carbon atoms ($b_2a_1$ $\alpha$) and one or more ethylenically unsaturated monomers ($b_2a_1$ $\beta$) which differ therefrom, in a weight ratio ($b_2a_1$ $\alpha$) /($b_2a_1$ $\beta$) of from 90 : 10 to 60 : 40, and

$b_2a_2$) from 90 to 10 % by weight of one or more monomers which differ from $b_2a_1$ $\beta$), from the group consisting of the alkyl acrylates and methacrylates where alkyl is of 1 to 8 carbon atoms, the percentages in each case being based on $b_2$).

2. A thermoplastic molding material as claimed in claim 1 containing

A) from 30 to 70 % by weight of the polycarbonate and

B) from 70 to 30 % by weight of the graft copolymer which consists of

$b_1$) one or more elastomers (rubbers), which account for from 30 to 70 % by weight, based on B), and

$b_2$) a shell which is grafted onto the elastomer and accounts for from 70 to 30 % by weight, based on B), wherein the grafted shell contains, as copolymerized units,

$b_2a_1$) from 50 to 75 % by weight of a mixture of the vinylaromatic hydrocarbon ($b_2a_1$ $\alpha$) and the ethylenically unsaturated monomer ($b_2a_1$ $\beta$) and

$b_2a_2$) from 50 to 25 % by weight of the monomer which is different from $b_2a_1$ $\beta$) the percentages in each case being based on $b_2$).

3. A thermoplastic molding material as claimed in claim 1, wherein the elastomer $b_1$) exclusively contains, as copolymerized units,

$b_1a_1$) a diene from the group consisting of the conjugated dienes of 4 or 5 carbon atoms.

4. A thermoplastic molding material as claimed in claim 2, wherein the elastomer $b_1$) contains, as copolymerized monomer $b_1a_1$), only butadiene.

5. Use of a molding material as claimed in claim 1 for the production of moldings.

6. A molding produced from a molding material as claimed in claim 1.


## Revendications

1. Matière à mouler thermoplastique contenant

A) 10 à 90 % en poids, sur la base de la somme de A) et de B), d'au moins un polycarbonate et

B) 90 à 10 % en poids, sur la base de la somme de A) et de B), d'au moins un copolymère greffé ayant une grosseur moyenne de particules dans la gamme de 50 à 700 nm (valeur $d_{50}$ de la distribution de masse intégrale), qui se compose de :

$b_1$) au moins un élastomère (caoutchouc) ayant une température de solidification de moins de O °C, qui constitue 10 à 80 % en poids de B), et

$b_2$) une enveloppe protectrice greffée sur l'élastomère, qui constitue 90 à 20 % en poids de B), l'élastomère $b_1$) contenant en liaison polymère

$b_1a_1$) 35 à 100 % en poids, sur la base de $b_1$), d'au moins un diène choisi dans le groupe des diènes conjugués à 4 ou 5 atomes de C,

$b_1a_2$) 0 à 65 % en poids, sur la base de $b_1$), d'au moins un monomère choisi dans le groupe des acrylates d'alkyle ou des méthacrylates d'alkyle à 1-8 atomes de C dans le radical alkyle, la somme de $b_1a_1$) et de $b_1a_2$) étant égale à 100 % en poids, l'enveloppe protectrice $b_2$) étant édifiée de façon connue en soi par polymérisation successive de différents monomères greffés ou de mélanges de ceux-ci, $b_2a_1$) étant tout d'abord mis en réaction en présence de l'élastomère $b_1$), puis $b_2a_2$) étant mis en réaction en présence du produit greffé du premier temps du procédé, caractérisée en ce que l'enveloppe protectrice greffée contient en liaison polymère, sur la base de $b_2$),

$b_2a_1$) 10 à 90 % en poids d'un mélange d'au moins un hydrocarbure vinylaromatique à 8-12 atomes de C ($b_2a_1$ $\alpha$) et d'au moins un monomère éthyléniquement insaturé différent de ce dernier ($b_2a_1$ $\beta$) dans un rapport en poids ($b_2a_1$ $\alpha$)/($b_2a_1$ $\beta$) de 90 : 10 à 60 : 40, et

$b_2a_2$) 90 à 10 % en poids d'au moins un monomère différent de $b_2a_1$ $\beta$), choisi dans le groupe des acrylates d'alkyle ou des méthacrylates d'alkyle à 1-8 atomes de C dans le radical alkyle.

2. Matière à mouler thermoplastique selon la revendication 1, contenant

A) 30 à 70 % en poids du polycarbonate et

B) 70 à 30 % en poids du copolymère greffé,

qui se compose de :

b₁) au moins un élastomère (caoutchouc) qui constitue, sur la base de B), 30 à 70 % en poids, et

b₂) une enveloppe protectrice greffée sur l'élastomère, qui constitue, sur la base de B), 70 à 30 % en poids,

caractérisée en ce que l'enveloppe protectrice greffée contient en liaison polymère, sur la base de b₂),

b₂a₁) 50 à 75 % en poids d'un mélange de l'hydrocarbure vinylaromatique (b₂a₁ α) et du monomère éthyléniquement insaturé (b₂a₁, β), et

b₂a₂) 50 à 25 % en poids du monomère différent de b₂a₁ β).

3. Matière à mouler thermoplastique selon la revendication 1, l'élastomère b₁) contenant exclusivement en liaison polymère

b₁a₁) un diène choisi dans le groupe des diènes conjugués à 4 ou 5 atomes de C.

4. Matière à mouler thermoplastique selon la revendication 2, l'élastomère b₁) ne contenant en liaison polymère que du butadiène en tant que monomère b₁a₁).

5. Utilisation de matières à mouler selon la revendication 1 pour la fabrication de pièces moulées.

6. Pièces moulées, fabriquées à partir de matières à mouler selon la revendication 1.